# EUROPÄISCHE PATENTANMELDUNG

(11) **EP 3 895 930 A1**
(43) Veröffentlichungstag der Anmeldung: **20.10.2021**
(21) Anmeldenummer: 21162027.3
(22) Anmeldetag: 11.03.2021
(51) Int. Cl.: B60L 3/00, B60L 50/60, B60R 16/03

(54) **STEUERGERÄTEARCHITEKTUR**

(30) Priorität: 15.04.2020 DE 102020204739
(71) Anmelder: Robert Bosch GmbH, 70442 Stuttgart (DE)
(72) Erfinder: Kretschmer, Markus, 71636 Ludwigsburg (DE); Gleiter, Andreas, 70437 Stuttgart (DE); Manka, Daniel, 74343 Sachsenheim (DE)

(57) **Zusammenfassung**

Die Erfindung bezieht sich auf eine Steuergerätearchitektur (20) eines elektrisch betriebenen Fahrzeugs (10), welches ein 48-Volt-Batteriesystem (12) umfasst. Die Steuergerätearchitektur (20) enthält eine Aufwach-/Initialisierungseinrichtung (14), die mit dem 48-Volt-Batteriesystem (12) verbunden ist zur Vermeidung einer plötzlichen, unbeabsichtigten Beschleunigung des Fahrzeugs. Die Aufwach-/Initialisierungseinrichtung (14) umfasst ein Solid State Relay (16), welches einen Entladestrom des 48-Volt-Batteriesystems (12) begrenzt.

## Beschreibung

### Technisches Gebiet

Die Erfindung bezieht sich auf eine Steuergerätearchitektur eines elektrisch betriebenen Fahrzeugs, welches ein 48-Volt-Batteriesystem umfasst und die Steuergerätearchitektur eine Aufwach- oder Initialisierungseinrichtung enthält, die mit dem 48-Volt-Batteriesystem verbunden ist zur Vermeidung einer plötzlichen unbeabsichtigten Beschleunigung des Fahrzeugs. Darüber hinaus bezieht sich die Erfindung auf die Verwendung der Steuergerätearchitektur zur Initialisierung eines elektrisch betriebenen Fahrzeugs.

### Stand der Technik

CN 104842802 A bezieht sich auf ein Fahrzeugsteuersystem. Das Fahrzeugsteuersystem ist für ein elektrisch betriebenes Fahrzeug wie ein elektrisches Fahrrad, elektrische Rollstühle, elektrische Dreiräder und elektrische Roller geeignet und umfasst ein 48-Volt-Batteriesystem.

CN 100559314 A1 bezieht sich auf eine Vorrichtung zum Betrieb eines elektrischen Rollers, insbesondere einer Steuereinrichtung. Die Steuereinrichtung umfasst ein 48-Volt-Batteriesystem und eine Steuereinrichtung, der ein Aufwachkreis zugeordnet ist.

Batteriebetriebene Elektroroller der Fahrzeugklasse L1e (≤ 4 kW/≙ 50 ccm, "Mofa-Klasse") beziehungsweise der Fahrzeugklasse L3e (≤ 11kW/≙ 125 ccm) besitzen als Energiequelle in der Regel ein 48-Volt-Batteriesystem. Die Aufgabe dieses 48-Volt-Batteriesystems liegt darin, die für den Betrieb des elektrisch angetriebenen Rollers notwendige Energie bereitzustellen. Typischerweise sind derartige Elektroroller mit zwei unterschiedlichen Spannungsebenen versehen: 48 Volt für die Antriebseinheit in Gestalt einer elektrischen Maschine und 12 Volt für den Betrieb verschiedener Steuergeräte, wie die Beleuchtung, Blinker, Hupe und weitere Systeme.

Der Aufbau solcher Elektroroller ist dabei von Hersteller zu Hersteller höchst unterschiedlich. Ein einheitlicher Standard ist - weltweit gesehen - bisher nicht gegeben. Aus diesem Grund wird ein "Aufstartverhalten", auch als "Wake-up" bezeichnet, höchst unterschiedlich realisiert. Bei manchen Systemen wird über eine konventionell verbaute 12-Volt-Bleibatterie ein Fahrzeugrechner kontinuierlich versorgt. Ein derartig versorgter Fahrzeugrechner kann per Schlüsselbetätigung, einer Smartphone-App oder mittels eines RFID-Chips aufgeweckt und somit für den Betrieb initialisiert werden.

### Darstellung der Erfindung

Erfindungsgemäß wird eine Steuergerätearchitektur eines elektrisch betriebenen Fahrzeugs vorgeschlagen, welches ein 48-Volt-Batteriesystem umfasst, wobei die Steuergerätearchitektur eine Aufwach- oder Initialisierungseinrichtung umfasst, die mit dem 48-Volt-Batteriesystem verbunden ist zur Vermeidung einer plötzlichen unbeabsichtigten Beschleunigung des Fahrzeugs, wobei die Aufwach-/Initialisierungseinrichtung ein Solid State Relay (SSR) umfasst, das einen Entladestrom des 48-Volt-Batteriesystems während einer Aufwach-/Initialisierungsphase des elektrisch betriebenen Fahrzeugs begrenzt. Das SSR kann in vorteilhafter Weise Teil eines Batteriemanagementsystems sein oder auch separat untergebracht werden.

Durch die erfindungsgemäß vorgeschlagene Lösung kann während der Aufwach-/Initialisierungsphase eines elektrisch betriebenen Fahrzeugs eine unbeabsichtigte Beschleunigung des elektrisch betriebenen Fahrzeugs wirksam vermieden werden, so lange noch nicht alle Steuergeräte ihre Betriebsbereitschaft angezeigt haben.

In Weiterbildung der erfindungsgemäß vorgeschlagenen Steuergerätearchitektur ist dem 48-Volt-Batteriesystem ein Batteriemanagementsystem zugeordnet. Ein Entladestrom des 48-Volt-Batteriesystems wird beispielsweise während der Aufwach-/Initialisierungsphase auf einen Entladestromwert von 0,05 A bis 5 A begrenzt.

In Weiterbildung der erfindungsgemäß vorgeschlagenen Steuergerätearchitektur stellt das 48-Volt-Batteriesystem ein erstes Spannungsniveau zur Versorgung einer elektrischen Maschine sowie ein zweites Spannungsniveau für einen Fahrzeugrechner des elektrisch betriebenen Fahrzeugs.

In vorteilhafter Weiterbildung der erfindungsgemäß vorgeschlagenen Steuergerätearchitektur ist vorgesehen, dass dem 48-Volt-Batteriesystem des elektrisch betriebenen Fahrzeugs ein Spannungswandler mit einer 48-Volt-Seite und einer 12-Volt-Seite zugeordnet ist. Dadurch bietet sich der Vorteil, dass das elektrisch betriebene Fahrzeug auf mindestens zwei Spannungsebenen aus ein und derselben Spannungsquelle versorgt werden kann, so dass die bisher teilweise eingesetzte 12-Volt-Batterie entfallen kann. Bei der erfindungsgemäß vorgeschlagenen Lösung wird über die 12-Volt-Seite ein Kommunikations-CAN-Bus versorgt, wohingegen über die 48-Volt-Seite des Spannungswandlers ein Ansteuergerät und der elektrische Antrieb des elektrisch betriebenen Fahrzeugs versorgt werden.

Bei der erfindungsgemäß vorgeschlagenen Steuergerätearchitektur steuert der Fahrzeugrechner über ein Aktivierungssignal einen Spannungswandler an. Über dieses Aktivierungssignal kann ein Spannungswandler (DC/DC-Wandler) ein- oder ausgeschaltet werden. Das Einschalten des DC/DC-Wandlers erfolgt nach der Initialisierungsphase, da sich danach die elektrische Last erhöht.

Die Erfindung bezieht sich darüber hinaus auf ein Verfahren zur Initialisierung eines elektrisch betriebenen Fahrzeugs, wobei die nachfolgenden Verfahrensschritte durchlaufen werden:
a) Initialisierung eines einem 48-Volt-Batteriesystem zugeordneten Batteriemanagementsystems über eine Aufwachvorrichtung und Aktivierung eines Fahrzeugrechners über das Batteriemanagementsystem durch Einschalten der 48-Volt-Spannung,
b) eine Limitierung eines Entladestroms des 48-Volt-Batteriesystems wird aktiviert,
c) Aktivieren weiterer Steuergeräte über den Fahrzeugrechner oder Aktivieren eines DC/DC-Wandlers,
d) Rückmeldung der Einsatzbereitschaft der gemäß Verfahrensschritt c) aktivierten weiteren Steuergeräte an den Fahrzeugrechner und
e) Rücknahme der gemäß Verfahrensschritt b) aktivierten Limitierung des Entladestroms auf einen Entladestromwert im Normalbetriebszustand.

Durch das erfindungsgemäß vorgeschlagene Verfahren zur Initialisierung eines elektrisch betriebenen Fahrzeugs ist ein sicherer Betrieb des Fahrzeugs insbesondere in dessen Initialisierungsphase gewährleistet, da der insbesondere aus dem 48-Volt-Batteriesystem entnommene Entladestrom begrenzt ist, so dass Dritte durch beispielsweise ein unbeabsichtigtes Beschleunigen eines elektrisch betriebenen Fahrzeugs nicht geschädigt werden.

In Weiterbildung des erfindungsgemäß vorgeschlagenen Verfahrens erfolgt gemäß Verfahrensschritt b) die Aktivierung des Fahrzeugrechners über einen Fahrzeug-CAN-Bus. Gemäß Verfahrensschritt c) wird die Limitierung des Entladestroms des 48-Volt-Batteriesystems über ein Solid State Relay dargestellt.

In Weiterbildung des erfindungsgemäß vorgeschlagenen Verfahrens wird gemäß Verfahrensschritt d) die Aktivierung weiterer Steuergeräte mittels des Fahrzeugrechners über einen Kommunikations-CAN-Bus dargestellt.

Sobald die Aufwach-/Initialisierungsphase der Steuergerätearchitektur abgeschlossen ist, ist die Fahrbereitschaft des elektrisch angetriebenen Fahrzeugs hergestellt. Schließlich bezieht sich die Erfindung auf die Verwendung der Steuergerätearchitektur zur Initialisierung eines elektrisch betriebenen Fahrzeugs.

### Vorteile der Erfindung

Der erfindungsgemäß vorgeschlagenen Lösung folgend kann eine Steuergerätearchitektur bereitgestellt werden, die ohne einen separaten- 12-Volt-(herkömmlicherweise als Bleibatterie ausgebildeten) Energiespeicher auskommt. Aufgrund des Entfalls einer derartigen, bisher konventionell eingesetzten Batterie erfolgt die Initialisierung des elektrisch betriebenen Fahrzeugs bei der erfindungsgemäß vorgeschlagenen Lösung über ein dem 48-Volt-Batteriesystem zugeordneten Batteriemanagementsystem. Über das Batteriemanagementsystem werden dann per CAN-Kommunikationsbussen andere Fahrzeugsteuergeräte, insbesondere auch der Fahrzeugrechner initialisiert, der wiederum weitere Steuergeräte initialisiert, so dass die Betriebsbereitschaft des elektrisch angetriebenen Fahrzeugs hergestellt wird.

Durch die erfindungsgemäß vorgeschlagene Lösung wird während des Aufwachvorgangs (der nur eine Zeitdauer von wenigen Sekunden in Anspruch nimmt) vermieden, dass aufgrund noch nicht eindeutigen Verhaltens der verschiedenen nach und nach initialisierten Steuergeräte kein ungewolltes Verhalten des elektrischen Antriebs, insbesondere kein ungewolltes plötzliches Beschleunigen des Fahrzeugs auftritt.

Durch die erfindungsgemäß vorgeschlagene Entladestrombegrenzung während der Aufwach-/Initialisierungsphase des elektrisch betriebenen Fahrzeugs wird wirksam ausgeschlossen, dass dessen elektrischer Antrieb aufgrund von unplausiblen Steuersignalen noch nicht vollständig initialisierte Steuergeräte während der Aufwachphase eine plötzliche und ungewollte Beschleunigung ausführt.
Insbesondere durch den Einsatz beispielsweise eines Solid State Relay kann auf einfache und robuste Weise die Leistungsentnahme aus dem 48-Volt-Batteriesystem des elektrisch betriebenen Fahrzeugs so lange begrenzt werden, bis sämtliche Steuergeräte beispielsweise ein deren Einsatzbereitschaft anzeigendes Signal rückmelden. Abhängig von der Anwendung kann das die Einsatzbereitschaft anzeigende Signal eine weitere Bestätigung des das elektrische Fahrzeug benutzenden Benutzers vorrausetzen, wozu beispielsweise in vorteilhafter Weise eine zweite Stufe eines "Ignition Key" heranzuziehen wäre.

Durch die erfindungsgemäß vorgeschlagene Lösung kann in vielen Einsatzmöglichkeiten ein separater 12-Volt-Ausgang der 48-Volt-Batterie entfallen. Dadurch wiederum können neben den zusätzlichen Bauteilen und dem dafür notwendigen Platzbedarf auf der Schaltungsplatine und im Bereich des Steckers auch Aufwände, die zur Absicherung der 12-Volt-Schnittstelle in der 48-Volt-Batterie erforderlich wären, eingespart werden. Die Schnittstelle kann in vorteilhafter Weise lediglich durch eine Softwareerweiterung realisiert werden.

### Kurze Beschreibung der Zeichnungen

Ausführungsformen der Erfindung werden anhand der Zeichnungen und der nachfolgenden Beschreibung näher erläutert.

Es zeigen:
- Figur 1: ein Ausführungsbeispiel einer Steuergerätearchitektur für ein elektrisch betriebenes Fahrzeug und
- Figur 2: die Aufwachphase eines Fahrzeugsystems.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

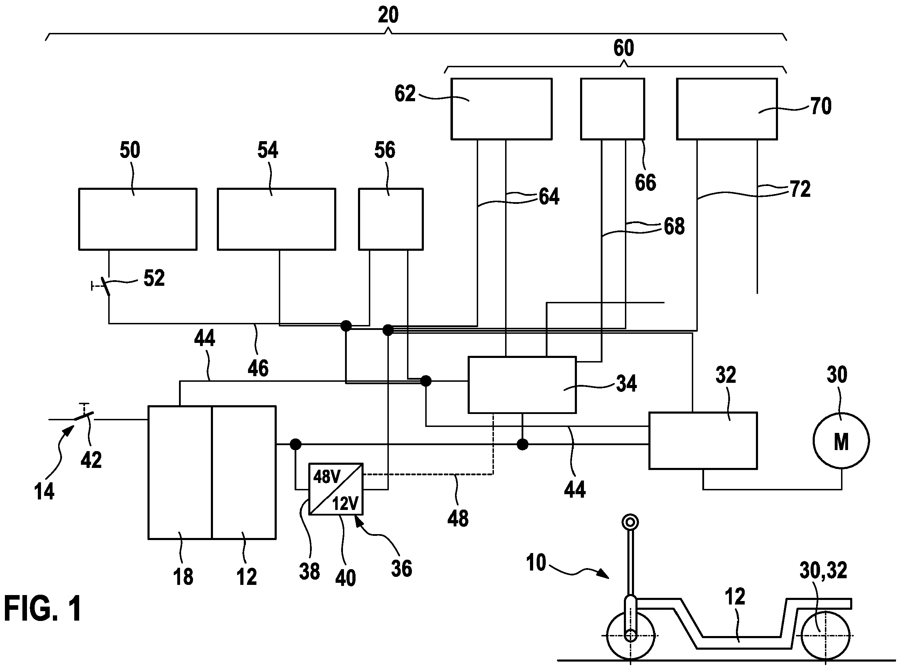

Der Darstellung gemäß Figur 1 ist eine mögliche Ausführungsvariante für eine Steuergerätearchitektur 20 zu entnehmen.

Aus der schematischen Darstellung gemäß Figur 1 geht hervor, dass ein elektrisches Fahrzeug, beispielsweise ein Elektroroller 10 ein 48-Volt-Batteriesystem 12 umfasst. Dieses wird über eine Aufwach-/Initialisierungseinrichtung 14 initialisiert. Dem 48-Volt-Batteriesystem 12 ist ein Batteriemanagementsystem 18 zugeordnet, in welches ein Solid State Relay 16 integriert ist. Ein Schütz oder ein Relais kann durch eine Halbleiterschaltung mit Halbleiterbauelementen, wie beispielsweise MOSFETs oder IGBTs ersetzt werden. Derartige Transistoren weisen in der Regel eine parasitäre Diode (Body diode) auf. Um beide Stromrichtungen, d. h. die Lade- und die Entladerichtung abschalten zu können, müssen mindestens zwei Halbleiter zueinander entgegengesetzt in Reihe (antiseriell) geschaltet werden.

Das als Elektroroller 10 ausgebildete elektrisch betriebene Fahrzeug umfasst neben der in Figur 1 dargestellten Steuergerätearchitektur 20 eine elektrische Maschine 30 als Antrieb. Die elektrische Maschine 30 wird über ein Ansteuergerät 32 angesteuert.

Die Steuergerätearchitektur 20, dargestellt in einer möglichen Ausführungsvariante in Figur 1, umfasst einen zentralen Fahrzeugrechner 34. Der Fahrzeugrechner 34 steuert auf der Antriebsebene (48-Volt-Seite) über einen Fahrzeug-CAN-Bus 44 das Batteriesystem 12, einen DC/DC-Spannungswandler 36 und das Ansteuergerät 32 für die elektrische Maschine 30.

Der Steuergerätearchitektur 20 gemäß Figur 1 ist des Weiteren zu entnehmen, dass der DC/DC-Spannungswandler 36 eine 48-Volt-Seite 38 sowie eine 12-Volt-Seite 40 aufweist. Über die 48-Volt-Seite 38 wird die elektrische Maschine 30 auf der Antriebsebene des elektrischen Fahrzeugs 10 versorgt, wohingegen über die 12-Volt-Seite 40 des DC/DC-Spannungswandlers 36 ein Kommunikations-CAN-Bus 46 des elektrischen Fahrzeugs 10 betrieben wird, der der Kommunikation von Fahrzeugkomponenten miteinander, gesteuert über den Fahrzeugrechner 34, dient. Ein Aktivierungssignal dient zum Einschalten des DC/DC-Spannungswandlers. Mit diesem werden 12-Volt-Verbraucher des Fahrzeugs, wie zum Beispiel Hupe, Fahrtrichtungsanzeiger, Abblend- und Standlicht und dergleichen versorgt. Da der 12-Volt-Ausgang des DC/DC-Spannungswandlers auf der von der 48-Volt-Batterie gelieferten 48-Volt-Spannung basiert, ist es notwendig, den DC/DC-Spannungswandler erst zu einem exakt definierten Zeitpunkt zu aktivieren, um ein eindeutiges Einschaltverhalten der an den DC/DC-Spannungswandler angeschlossenen Verbraucher zu gewährleisten.

Wie aus der Steuergerätearchitektur 20 gemäß der Darstellung in Figur 1 hervorgeht, wird das Batteriemanagementsystem 18, welches dem 28-Volt-Batteriesystem 12 zugeordnet ist, über die Aufwach-/Initialisierungseinrichtung 14 angesteuert, welche in der Ausführungsvariante gemäß Figur 1 als ein Aufwach-/Initialisierungsschalter 42 ausgeführt ist.

Auf der Ebene des Kommunikations-CAN-Bus 46 des elektrischen Fahrzeugs 10 liegt ein Spannungsniveau von 12 Volt vor, was ebenfalls unter Zwischenschaltung des DC/DC-Spannungswandlers 36 über das 48-Volt-Batteriesystem 12 des elektrisch betriebenen Fahrzeugs 10 gestellt wird.

Auf dieser Ebene sind ein Fahrtrichtungsanzeiger 50, der über einen entsprechenden Blinkerschalter 52 betätigt wird, vorgesehen, ferner ein Fahrlicht/Rücklicht-Schalter 54 sowie eine Anzeige 56. An der Anzeige 56 eines Elektrorollers 10 werden Fahrzeuginformationen, so zum Beispiel hinsichtlich Fernlicht, Abblendlicht, Fahrtrichtungsanzeiger, Ladezustand der Batterie und ähnliches angezeigt.

Auf dieser Ebene des elektrisch betriebenen Fahrzeugs 10 können darüber hinaus noch optionale Steuergeräte 60 vorgesehen sein. Dazu ist beispielsweise eine externe Kommunikationseinrichtung 62 zu zählen, die über einen externen CAN-Bus 64 beispielsweise an den Fahrzeugrechner 34 angeschlossen sein kann. Des Weiteren kann eine Diagnoseeinrichtung 66 über einen Diagnose-CAN-Bus 68 mit dem zentralen Fahrzeugrechner 34 verbunden sein. Darüber hinaus besteht die Möglichkeit, im Rahmen optionaler Steuergeräte 60 eine Kommunikationseinrichtung 70 über einen weiteren externen CAN-Bus 72 an den zentralen Fahrzeugrechner 34 anzuschließen.

Die Funktionsweise der in Figur 1 schematisch dargestellten Ausführungsvariante der Steuergerätearchitektur 20 stellt sich wie folgt dar: Die Initialisierung beziehungsweise das Aufwachen der Steuergerätearchitektur 20 gemäß der Darstellung in Figur 1 erfolgt über den Aufwach-/Initialisierungsschalter 42 der Aufwacheinrichtung 14. Über diesen wird das Batteriemanagementsystem 18, welches dem 48-Volt-Batteriesystem 12 zugeordnet ist, initialisiert. Da die elektrische Maschine 30 und das dazu gehörige Ansteuergerät 32 nach dem Aufwachen des 48-Volt-Batteriesystems 12 sofort mit elektrischer Leistung versorgt wird, wird durch die erfindungsgemäß vorgeschlagene Steuergerätearchitektur 20 sichergestellt, dass im Verlauf des Aufwachvorgangs, der wenige Sekunden andauert, aufgrund des noch nicht eindeutigen Verhaltens mehrerer Steuergeräte kein ungewolltes Verhalten der elektrischen Maschine 30, so zum Beispiel ein plötzliches Beschleunigen auftritt.

Dazu umfasst entweder das 48-Volt-Batteriesystem 12 oder das diesem zugeordnete Batteriemanagementsystem 18 ein Solid State Relay 16 (SSR).

Über das Solid State Relay 16 wird direkt nach dem Aufwachen des 48-Volt-Batteriesystems 12 der Entladestrom des 48-Volt-Batteriesystems 12 begrenzt, beispielsweise auf einen Entladestrom 0,05 A und 5 A. Die Begrenzung des Entladestroms des 48-Volt-Batteriesystems 12 dauert so lange an, bis sämtliche Steuergeräte des elektrisch betriebenen Fahrzeugs 10 aufgeweckt und einsatzbereit sind. Durch die erfindungsgemäß vorgeschlagene Entladestrombegrenzung wird ausgeschlossen, dass die elektrische Maschine 30 aufgrund unplausibler Steuersignale während der Aufwachphase 94 der verschiedenen Steuergeräte beziehungsweise der Steuergerätearchitektur 20 eine plötzliche beziehungsweise ungewollte Beschleunigung des elektrisch betriebenen Fahrzeugs, beispielsweise ausgebildet als Elektroroller 10, hervorruft.

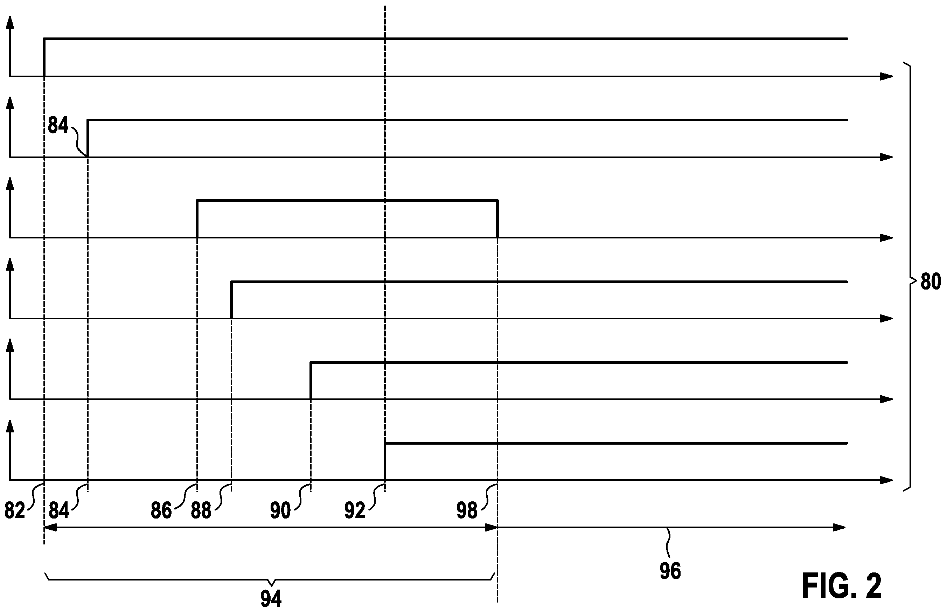

Durch den Einsatz des Solid State Relay 16 kann auf einfache und robuste Weise die Leistungsentnahme aus dem 48-Volt-Batteriesystem 12 so lange begrenzt werden, bis sämtliche Steuergeräte beispielsweise eine Fahrbereitschaft 96 melden. Die zeitliche Abfolge der entsprechenden Ansteuerzeitpunkte ist Figur 2 zu entnehmen.

Der Darstellung gemäß Figur 2 sind die Aufwachphase 94 sowie die Initialisierung beziehungsweise die Aktivierung einer Entnahmestromlimitierung zu entnehmen.

Zu Beginn einer Aufwachphase 94 des elektrisch betriebenen Fahrzeugs 10, beispielsweise eines Elektrorollers, erfolgt die Initialisierung des Aufwach-/Initialisierungsschalters 42. Dadurch aktiviert das Batteriemanagementsystem 18 den zentralen Fahrzeugrechner 34. Dies erfolgt zu einem Aktivierungszeitpunkt 84. Gleichzeitig limitiert das Solid State Relay 16 - sei es in das Batteriemanagementsystem 18 integriert, sei es in das 48-Volt-Batteriesystem 12 integriert - Entnahmestrom des 48-Volt-Batteriesystems 12 beispielsweise auf einen Entladestrombereich zwischen zum Beispiel 0,05 A bis 5 A.

Nach einem Limitierungszeitpunkt 86 in Bezug auf den Entnahmestrom aus dem 48-Volt-Batteriesystem 12 folgt zu einem Aktivierungszeitpunkt 88 eine Ansteuerung weiterer Steuergeräte beispielsweise ein Ansteuergerät 32 beziehungsweise eine Anzeige 56 durch den zentralen Fahrzeugrechner 34. Die zum Aktivierungszeitpunkt 88 adressierten weiteren Steuergeräte melden zu einem Rückmeldezeitpunkt 90 Einsatzbereitschaft zurück. Die Rückmeldung der Einsatzbereitschaft der weiteren Steuergeräte, beispielsweise des Ansteuergerätes 32 der Anzeige 56, sowie der optionalen Steuergeräte 60 erfolgt an den zentralen Fahrzeugrechner 34. Dieser meldet wiederum zu einem Rückmeldezeitpunkt 92 die Aktivierung aller Systeme der Steuergerätearchitektur 20 an das Batteriemanagementsystem 18 zurück, durch welche dann nach Beendigung der Aufwachphase 94 eine Rücknahme 98 der Entladestromlimitierung durchgeführt wird. Nach Beendigung der Aufwachphase 94 liegt eine Fahrbereitschaft 96 des elektrisch betriebenen Fahrzeugs, beispielsweise eines Elektrorollers 10, vor.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Steuergerätearchitektur (20) eines elektrisch betriebenen Fahrzeugs, welches ein 48-Volt-Batteriesystem (12) umfasst und die Steuergerätearchitektur (20) eine Aufwach- oder Initialisierungseinrichtung (14) umfasst, die mit dem 48-Volt-Batteriesystem (12) verbunden ist, zur Vermeidung einer plötzlichen, unbeabsichtigten Beschleunigung des Fahrzeugs, **dadurch gekennzeichnet, dass** die Aufwach- oder Initialisierungseinrichtung (14) ein Solid State Relay (16) umfasst, das einen Entladestrom des 48-Volt-Batteriesystems (12) während einer Aufwach-/Initialisierungsphase (94) des Fahrzeugs begrenzt.

2. Steuergerätearchitektur (20) gemäß Anspruch 1, **dadurch gekennzeichnet, dass** dem 48-Volt-Batteriesystem (12) ein Batteriemanagementsystem (18) zugeordnet ist.

3. Steuergerätearchitektur (20) gemäß den Ansprüchen 1 bis 2, **dadurch gekennzeichnet, dass** der Entladestrom des 48-Volt-Batteriesystems (12) während der Aufwach-/Initialisierungsphase(94) auf einen Strombereich von 0,05 Ampere bis 5 Ampere begrenzt ist.

4. Steuergerätearchitektur (20) gemäß den Ansprüchen 1 bis 3, **dadurch gekennzeichnet, dass** das 48-Volt-Batteriesystem (12) ein erstes Spannungsniveau zur Versorgung einer elektrischen Maschine (30) und ein zweites Spannungsniveau für den Fahrzeugrechner (34) stellt.

5. Steuergerätearchitektur (20) gemäß den Ansprüchen 1 bis 4, **dadurch gekennzeichnet, dass** dem 48-Volt-Batteriesystem (12) ein DC/DC-Spannungswandler (36) mit einer 48-Volt-Seite (38) und einer 12-Volt-Seite (40) zugeordnet ist.

6. Steuergerätearchitektur (20) gemäß den Ansprüchen 1 bis 5, **dadurch gekennzeichnet, dass** die 12-Volt-Seite (40) einen Kommunikations-CAN-Bus (46) versorgt und die 48-Volt-Seite (38) ein Ansteuergerät (32) und die elektrische Maschine (30) versorgt.

7. Steuergerätearchitektur (20) gemäß den Ansprüchen 1 bis 6, **dadurch gekennzeichnet, dass** der Fahrzeugrechner (34) über ein Aktivierungssignal den DC/DC-Spannungswandler (36) ansteuert.

8. Steuergerätearchitektur (20) gemäß den Ansprüchen 1 bis 7, **dadurch gekennzeichnet, dass** ein Solid State Relay (16) entweder in ein Batteriemanagementsystem (18) integriert oder als separates Bauteil diesem zugeordnet ist.

9. Verfahren zur Initialisierung eines elektrisch betriebenen Fahrzeugs mit nachfolgenden Verfahrensschritten:
a) Initialisierung eines einem 48-Volt-Batteriesystem (12) zugeordneten Batteriemanagementsystems (18) über eine Aufwach-/Initialisierungseinrichtung (14) und Aktivieren eines Fahrzeugrechners (34) über das Batteriemanagementsystem (18) durch Einschalten der 48-Volt-Spannung,
b) Limitierung eines Entladestroms des 48-Volt-Batteriesystems (12),
c) Aktivierung weiterer Steuergeräte (32, 56) oder eines DC/DC-Spannungswandlers (36) über den Fahrzeugrechner (34),
d) Rückmeldung der Einsatzbereitschaft der gemäß Verfahrensschritt c) aktivierten weiteren Steuergeräte (32, 56) an den Fahrzeugrechner (34) und
e) Rücknahme (98) der gemäß Verfahrensschritt b) aktivierten Limitierung des Entladestromes des 48-Volt-Batteriesystem (12) auf einen Entladestromwert für einen Normalbetriebszustand.

10. Verfahren gemäß Anspruch 9, **dadurch gekennzeichnet, dass** gemäß Verfahrensschritt a) die Aktivierung des Fahrzeugrechners (34) über einen Fahrzeug-CAN-Bus (44) erfolgt.

11. Verfahren gemäß Anspruch 9, **dadurch gekennzeichnet, dass** gemäß Verfahrensschritt b) die Limitierung des Entladestroms des 48-Volt-Batteriesystems (12) über ein Solid State Relay (16) erfolgt.

12. Verfahren gemäß Anspruch 9, **dadurch gekennzeichnet, dass** gemäß Verfahrensschritt c) die Aktivierung weiterer Steuergeräte (32, 56) mittels des Fahrzeugrechners (34) über einen Kommunikations-CAN-Bus (46) durchgeführt wird.

13. Verfahren gemäß Anspruch 9, **dadurch gekennzeichnet, dass** gemäß Verfahrensschritt e) die Aufwach- und Initialisierungsphase (94) der Steuergerätearchitektur (20) abgeschlossen ist und die Fahrbereitschaft (96) des elektrisch betriebenen Fahrzeugs hergestellt ist.

14. Verwendung der Steuergerätearchitektur (20) gemäß einem der Ansprüche 1 bis 8 zur Initialisierung eines elektrisch betriebenen Fahrzeugs.
